Europäisches Patentamt

**European Patent Office**

**Office européen des brevets**

(19)

(11) Numéro de publication: **0 117 172**
**B1**

(12) **FASCICULE DE BREVET EUROPÉEN**

(45) Date de publication du fascicule du brevet:
26.11.86

(51) Int. Cl.⁴: **B 60 C 23/02**, B 60 T 8/32 //
G01P3/488

(21) Numéro de dépôt: 84400116.4

(22) Date de dépôt: 20.01.84

(54) **Dispositif de détection de sous-gonflage d'un pneumatique et de mesure de l'état cinétique de la roue d'un véhicule et du véhicule.**

(30) Priorité: 20.01.83 FR 8300667

(43) Date de publication de la demande:
29.08.84 Bulletin 84/35

(45) Mention de la délivrance du brevet:
26.11.86 Bulletin 86/48

(84) Etats contractants désignés:
AT BE CH DE GB IT LI NL SE

(56) Documents cité:
FR-A-2 420 439

(73) Titulaire: RENAULT VEHICULES INDUSTRIELS
Société Anonyme dite:, 129 rue Servient "La
Part Dieu", F-69003 Lyon (FR)

(72) Inventeur: Sibeud, Jean- Paul, Chaponnay Quartier
Sous Vigne, F-69360 Saint Symphorien D'Ozon
(FR)

(74) Mandataire: Ernst- Schonberg, Michel, R.N.U.R. S.
0604 B.P. 103 8 & 10, avenue Emile- Zola, F-92109
Boulogne Billancourt (FR)

EP 0 117 172 B1

LIBER. STOCKHOLM 1986

## Description

L'invention concerne les dispositifs de détection du sous-gonflage d'un pneumatique d'un véhicule automobile pendant la circulation de celui-ci.

On connaît par la publication FR-A-2 42 0 39 un dispositif de détection de sous-gonflage d'un pneumatiqué conforme au préambule de la revendication 1, qui pendant la circulation de celui-ci, est interconnecté et utilisable avec un équipement d' antiblocage des freins, du type comportant un circuit de régulation décelant l'état cinétique (décélération et accélération) qui est relié à un circuit d' entrée qui reçoit les signaux émis par un capteur.

Dans ce dispositif une couronne dentée tourne avec la roue du véhicule et la position d' une broche, placée dans l'entredent séparant deux dents, voisines de la couronne et soumise à la pression du pneumatique, est détectée par le capteur.

Les signaux périodiques émis par le capteur au cours de la rotation de la roue sont interprétés comme une décélération ou comme un état de sous-gonflage du pneumatique.

On constate néanmoins que la précision de la mesure peut être perturbée par l'état d'échauffement du pneumatique.

Le but de l'invention est de réaliser un dispositif de détection de sous-gonflage d'un pneumatique qui élimine les inconvénients précédents, c'est-à-dire qui soit simple et robuste, d'un entretien facile et d'une grande fiabilité de détection, et qui en outre assure la mesure de l'état cinétique de roue du véhicule en utilisant les mêmes éléments.

L'invention est caractérisée par le fait que:
- une roue dentée tournant avec la roue du véhicule possédé des dents en matériau amagnétique conducteur de l'électricité et au moins une dent constituée par une bobine portée par un matériau isolant et appartenant à un circuit qui est fermé par au moins un manocontact lorsque la pression dans le pneumatique correspondant est correcte et qui est ouvert lorsque cette pression est insuffisante.

Le dispositif ainsi constitué possède en outre:
- un fil conducteur, fixé également sur la roue, et reliant le ou les manocontacts et le bobinage de la roue dentée, le retour s'effectuant usuellement par la masse;
- un circuit magnétique fixé sur une partie fixe du support de la roue solidaire du châssis du véhicule et dans l'entrefer duquel défilent les dents de la roue dentée tournant avec la roue du véhicule, ce circuit magnétique comportant un bobinage électrique pour constituer un électro-aimant
- un calculateur électronique construit à partir d'un microprocesseur et fixé sur le châssis ou dans la cabine du véhicule, ce calculateur étant relié électriquement au bobinage de l'électro-aimant et agencé de manière à détecter les influences successives du passage des dents dans l'entrefer de l'électro-aimant, à déterminer les périodes successives séparant deux passages consécutifs et à interpréter les variations relatives de chacune de ces périodes par rapport à la ou les précédentes comme une décéleration ou une accélération, si cette variation relative reste dans les limites réduites et selon qu'il s' agisse d'une augmentation ou d'une diminution de la période, et comme un sous-gonflage du pneumatique de la roue considérée si au contrair la variation relative est très importante et fait passer la valeur de la période approximativement du simple au double, puis du double à la moitié, témoignant ainsi du passage de la dent portant le bobinage et de l'ouverture du circuit de ce bobinage par le ou les manocontacts.

D'autres particularités de l'invention apparaîtront dans la description qui va suivre d'un mode de réalisation pris comme exemple et représenté sur le dessin annexé, sur lequel:
la fig. 1 est une coupe partielle selon l'axe de la roue;
la fig. 2 est le schéma électrique de principe;
la fig. 3 est une vue partielle développée de la roue dentée;
les fig. 4 et 5 représentent les courbes en fonction du temps des signaux délivrés par la partie fixe sous l'influence de la rotation de l'organe tournant, respectivement quand la pression des pneumatiques est correcte et incorrecte; et
la fig. 6 représente le diagranme logique du traitement par le microprocesseur.

L'invention s'applique indifféremment aux roues simples et aux roues jumelées comme dans l'exemple représenté. La jante de la roue, ou chacune des jantes 1 des deux roues jumelées, est reliée respectivement à un manocontact 2 de type usuel, éventuellement par l'intermédiaire d'un réseau dé tuyauterie 3 de liaison et de gonflage. Ces manocontacts sont établis et réglés de manière qu'ils ferment un contact électrique lorsque la pression est supérieure ou égale à une pression minimum de sécurité.

L'invention prévoit par ailleurs une roue phonique 4 qui est montée pour tourner avec le moyeu 5 de la roue, de même que les manocontacts 2. Cette roue comporte un certain nombre de dents 6 régulièrement espacées en matériau conducteur amagnétique, excepté l'une d'entre elle 6a qui est non seulement amagnétique mais également isolante et comporte un bobinage 7 avec une entrée 8 et une sortie 9 et qui, lorsque l'entrée 8 et la sortie 9 sont mises en court-circuit, est susceptible d'induire dans l'électro-aimant de captage 10, une force électromagnétique pratiquement pas différente de celle induite par le passage des dents normales 6.

Conformément à l'invention, cette mise en court-circuit des bornes 8 et 9 de la bobine 7 est assurée par le ou les manocontacts 2 qui sont montés en circuit fermé avec cette bobine et en série entre eux s'il y en a plusieurs.

Selon l'habitude en matière d'électricité automobile une des deux liaisons reliant le manocontact unique aux deux bornes de la bobine 7 dans le cas d'une roue simple, ou encore une des trois liaisons raccordant les deux manocontacts 2 et la bobine 7 en série et en circuit fermé peut être constituée par la masse de la roue. Par exemple, si les deux manocontacts 2 sont eux-mêmes conçus avec une borne à la masse, il suffit d'utiliser deux conducteurs pour relier respectivement la borne unique de sortie de chacun des manocontacts 2 à l'une des bornes 8 et 9 de la bobine 7.

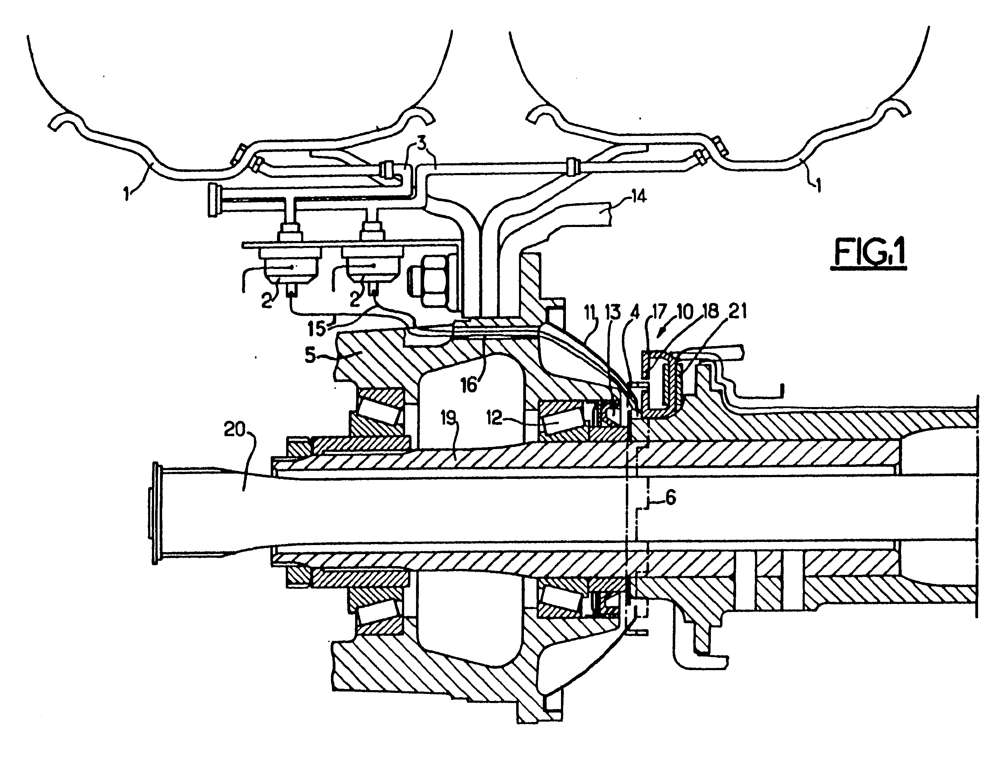

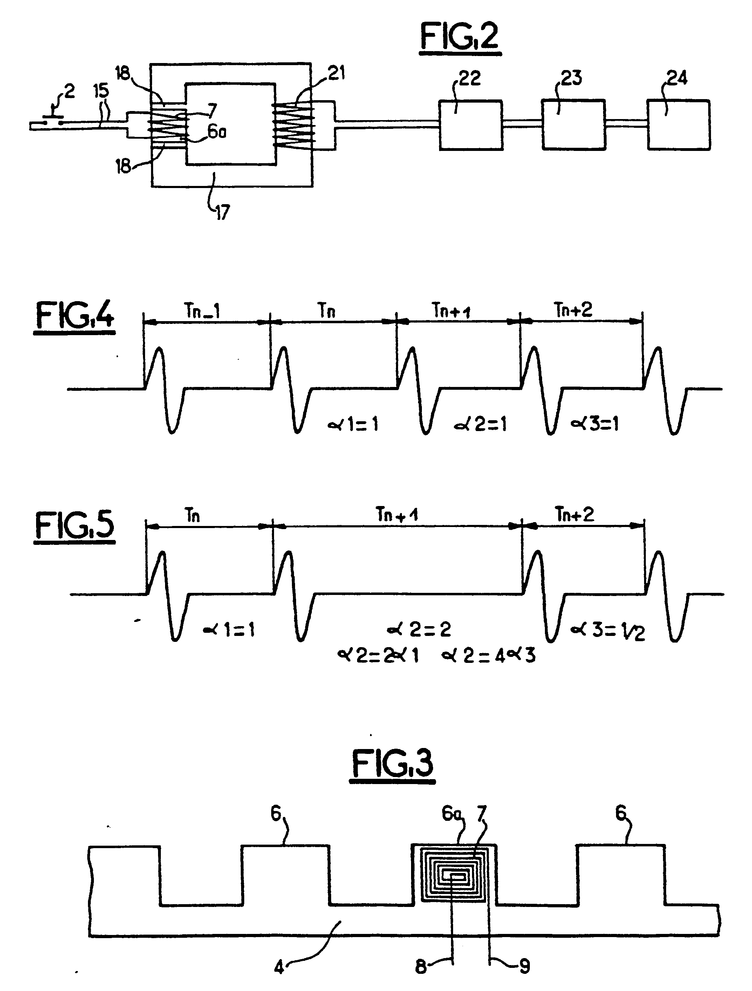

La roue phonique peut avantageusement être réalisée à l'aide d'un circuit imprimé, à simple face ou de préférence à double face, dont la (ou chaque) couche conductrice est laissée intacte pour constituer les dents normales 6, et se trouve conformée en un tracé spiralé à simple ou double face pour constituer le bobinage 7. Par ailleurs, cette roue phonique peut être de forme plane, mais pour une raison de pratique de montage et de démontagé de la roue, il est préférable de lui donner une configuration cylindrique comme dans l'exemple représenté sur les fig. 1 et 3 en réalisant le circuit imprimé sous forme d'une crémaillère rectiligne qui est enroulée selon un cylindre et fixée sur un des organes tournant.

Dans le cas d'un poids lourd, il est généralement prévu un bol de protection 11 entourant le roulement interne 12 et pour éviter que les fuites de lubrifiant pouvant éventuellement fuir du joint anti-fuite 13 ne viennent souiller le tambour de frein 14. Dans ce cas il est tout indiqué de fixer par tour moyen approprié la couronne cylindrique 4 directement sur ce bol 11. Dans le cas au contraire de voiture de tourisme, un tel bol n'est généralement pas prévu et il est alors possible de loger directement la couronne cylindrique 4 à l'intérieur de l'alésage du moyeu 5 dans lequel se logent le roulement 12 et le joint anti-fuite 13, en prolongeant éventuellement cet alésage de la longueur nécessaire.

Bien entendu les fils électrioues mentionnés précédemment, et représentés par 15 sur la fig. 1, pénètrent à l'intérieur du moyeu par un orifice 16 approprié et se rendent au bobinage 7 de la dent 6a en suivant le bol 11, tout l'ensemble de ces organes étant monté tournant avec les roues.

Au contraire, l'électro-aimant 10 est monté sur une partie fixe, c'est-à-dire non tournante avec les roues, cette partie fixe étant cependant le plus souvent une masse non suspendue qui est solidaire du châssis suspendu du véhicule mais par une liaison non rigide.

L'électro-aimant 10 comporte un circuit magnétique 17 quasiment fermé à part un léger entrefer 18 juste suffisant pour permettre le passage des dents 6. En particulier dans le cas où la roue phonique 4 est de configuration cylindrique, l'entrefer 18 est limité par des plans parallèles à l'axe de la roue, ce qui permet l'introduction et l'extraction axiales de la roue phonique dans cet entrefer en même temps que se produit l'introduction ou l'extraction axiale du moyeu 5 de la roue sur l'essieu 19, traversé par le demi-arbre 20 d'entraînement de la roue.

Outre ce circuit magnétique 17, l'électro-aimant 10 comporte un bobinage électrique 21 permettant de magnétiser l'électro-aimant. La bobine 21 de l'électro-aimant est parcourue par un courant de polarisation fourni par un générateur 22 à grande impédance interne. Ce courant de polarisation qui parcourt la bobine 21 crée un champ magnétique dans l'entrefer 18 dans lequel défilent les dents 6 et 6a lorsque la roue tourne. Ces dents sont alors parcourues par des courants de Foucault qui induisent à leur tour une force électro-motrice dans la bobine 21 en vertu de la loi de Lentz selon laquelle l'effet s'oppose à la cause.

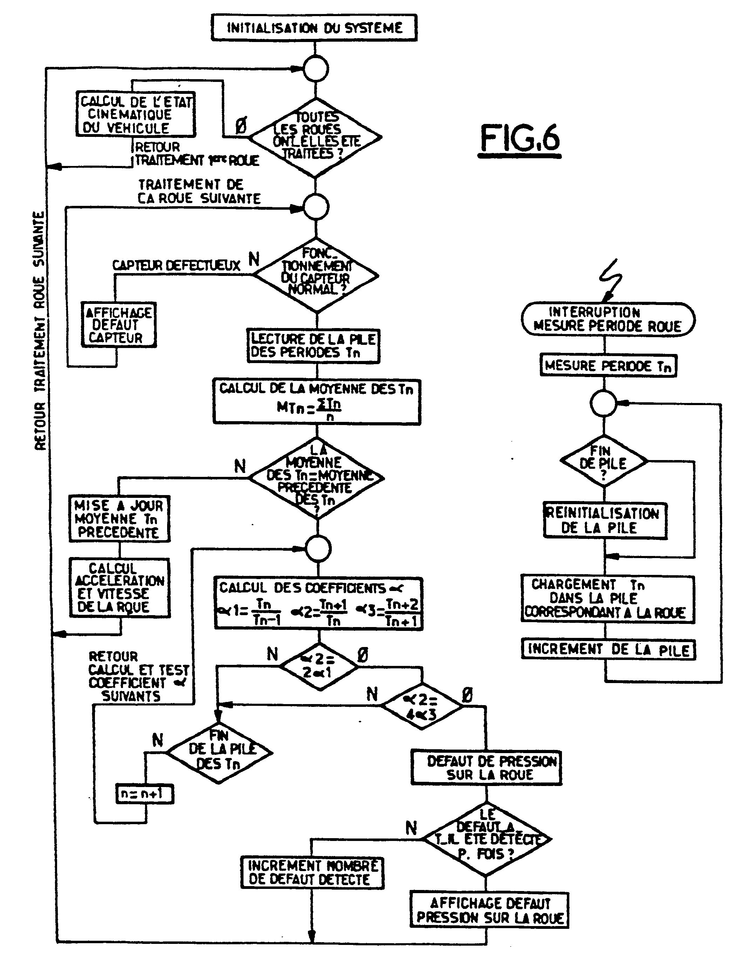

On voit sur la fig. 4 la forme des impulsions successives aux bornes de la bobine 21 dans les conditions normales, et la fig. 5 la forme de ces mêmes impulsions au voisinage du passage de la dent spéciale 6a et lorsque le manocontact a ouvert le circuit.

Dans les conditions normales, c'est-à-dire lorsque la pression est correcte dans le ou les pneumatiques et que par suite le circuit du bobinage 7 est fermé, les périodes Tn successives sont sensiblement constantes, ou en légère augmentation lorsque la roue est en décélération, ou encore en légère diminution lorsque la roue est en accélération. Au contraire, lorsque la pression est insuffisante, il se présente périodiquement une période Tn approximativement d'une durée double de la valeur moyenne des autres impulsions.

C'est cette remarque qui est mise à profit par l'invention pour détecter à la fois l'état cinétique de la roue (vitesse et accélération) et l'état de gonflage du ou des pneumatiques, en utilisant un calculateur 23 construit à partir d'un microprocesseur et qui mesure les périodes successives Tn d'une manière classique, c'est-à-dire par comptage de signaux provenant d'une base de temps ou horloge entre deux impulsions de déclenchement successives.

Ce calculateur calcule en permanence la moyenne arithmétique d'un certain nombre de périodes Tn (une pile) et pour chaque nouvelle période il réactualise si nécessaire la nouvelle valeur de la moyenne, et calcule le rapport $\alpha n$ entre la valeur actuelle Tn de la période et la valeur précédente Tn-1. Il interpréte alors la variation de $\alpha n$ sur trois valeurs successives, en remarquant que si les valeurs $\alpha n$ sont constantes, on peut en conclure qu'il n'y a pas de sous-gonflage et que la vitesse est constante, et cette vitesse peut être calculée exactement en fonction de la valeur moyenne de Tn, du nombre de dents de la roue phonique 4 et du développement de la roue du véhicule.

Si au contraire, les valeurs $\alpha n$ successives varient, si ces coefficients sont proches de l'unité, on en déduit une accélération dans le cas où cette valeur est inférieure à 1, et une décélération dans le cas où cette valeur est supérieure à 1, le calculateur pouvant alors calculer comme précédemment la vitessé moyenne et pouvant en outre calculer la valeur de l'accélération ou de la décélération en fonction de ces paramètres. Si au contraire, la valeur de α passe brusquement d'une valeur voisine de l'unité à une valeur sensiblement double, il est alors extrêmement probable qu'il s'agit d'un sous-gonflage plutôt que d'une brutale décélération. Toutefois, pour lever le doute on compare selon l'organigramme de la fig. 6 non pas deux mais trois valeurs successives de:

$\alpha 1 = Tn/Tn\text{-}1 \; \alpha 2 = Tn + 1/Tn \; \alpha 3 = Tn + 2/Tn + 1$

et si l'on a à la fois:

$\alpha 2 = 2 \alpha 1 \; et \; \alpha 2 = 4 \alpha 3$

et ceci plusieurs fois (P fois) de suite à raison d'une fois par tour de roue, le calculateur 23 peut conclure à un sous-gonflage et déclencher un système d'alarme ou d'affichage 24 en correspondance avec la roue considérée, le calculateur scrutant naturellement les diverses roues successivement.

Pour cela le calculateur dispose pour chaque roue d'un compteur de période et d'une pile associée au générateur 22 correspondant à cette roue. Chaque signal d'interruption provenant de ce générateur produit le calcul de Tn et le chargement de la pile qui fonctionne en boucle (partie droite de la fig. 6) avec un nombre d'emplacements mémoire correspondant de préférence au nombre des dents 6, 6a des roues phoniques 4. Le processeur proprement dit est unique et scrute à son rythme les diverses piles correspondant aux roues, pour vérifier le fonctionnement des capteurs, vérifier l'état de gonflage et déterminer l'état cinétique dés diverses roues.

On voit donc que des calculs simples et strictement linéaires basés sur des comptages des divisions et des mises en mémoire permet de déterminer tout à la fois l'état cinétique des diverses roues du véhicule, l'état cinétique du véhicule lui-même et l'état de gonflage de ces diverses roues. Naturellement, la programmation du microprocesseur destinée à effectuer les diverses opérations définies sur l'organigramme de la fig. 6 est du domaine de l'homme de l'art et ne présente aucune difficulté majeure.

**Revendications**

1. Dispositif de détection du sous-gonflage d'un pneumatique de roue (1) de véhicule automobile faisant également fonction de dispositif de mesure de l'état cinétique de la roue, et du véhicule à partir de l' état cinétique de plusieurs roues, du type comportant:

- un circuit électrique (7) tournant avec la roue et passant périodiquement devant un capteur électromagnétique (10),
- une roue dentée (4) tournant avec la roue (1) du véhicule et dont les caractéristiques électriques de l'une au moins (6a) des dents (6) sont modifiées par une chuté de pression dans l'un des pneumatiques,
- un électro-aimant (10) fixe en rotation et constituant le capteur électromagnétique dans lequel la roue dentée (4) génère un signal formé d'impulsions successives dont la période (Tn) est modifiée par la variation des caractéristiques électriques provoquées par la chute de pression dans l'un des pneumatiques, ainsi que par les conditions de vitesse et d' accélération de la rotation de la roue, et
- un calculateur (23) qui calcule les valeurs des périodes successives, la variation relative de cette valeur sur plusieurs périodes, et qui interprète cette variation comme une accélération ou une décélération ou encore comme un état de sous-gonflage du pneumatique selon l'allure de cette variation; caractérisé par le fait que la roue dentée (4), dont les dents (6) sont en matériau amagnétique conducteur de l'électricité, possède une dent au moins (6a) constituée par une bobine (7) portée par un matériau isolant et appartenant à un circuit qui est fermé par au moins un manocontact (2) lorsque la pression dans le pneumatique correspondant est correcte, et qui est ouvert lorsque cette pression est insuffisante.

2. Dispositif selon la revendication 1, caractérisé par le fait que ladite roue dentée (4) est constituée à partir d'un circuit imprime, a simple ou double face, constituant à la fois les dents normales (6) par des parties conductrices pleines, et la dent spéciale (6a) porteuse du bobinage (7) à l'aide d' un tracé de circuit imprimé à configuration spiralée.

3. Dispositif selon la revendication 2, caractérisé par le fait que ledit circuit imprimé est en forme de crémaillére rectiligne enroulée selon une configuration cylindrique de manière à faciliter le montage et le démontage axial de l'ensemble de la roue par pénétration des dents (6, 6a) également cylindriques dans l'entrefer (18) de l'électro-aimant (10) qui est parallèle à l'axe de la roue.

4. Dispositif selon l'une quelconque des revendications précédentes, caractérisé par le fait que le capteur électromagnétique est constitué par un électro-aimant (10) avec circuit magnétique (17) fermé excepté un entrefer réduit (18) dans l'intervalle duquel défilent les dents de la roue phonique (4).

5. Dispositif selon l'une quelconque des revendications précédentes, caractérisé par le fait que le calculateur (23) calcule trois valeurs (α 1, α 2, α 3) successives du rapport (α n) entre une période (Tn) et la période précédente (Tn-1), et si au cours de tours successifs de la roue, la deuxième valeur (α 2) est le double de la première (α 1) et le quadruple de la troisième (α 3), une alarme ou un indicateur de sous-gonflage de la roue considérée, est déclenchée, tandis que dans le cas contraire le calculateur détermine l'état cinétique de cette roue et l'état cinétique du véhicule à partir de celui de plusieurs roues.

## Claims

1. Apparatus for detecting underinflation of a motor vehicle wheel (1) tyre which also acts as an apparatus for measuring the kinetic state of the wheel and of the vehicle from the kinetic state of a plurality of wheels, of the type comprising:

- an electrical circuit (7) which rotates with the wheel and periodically passes in front of an electromagnetic detector (10),

- a toothed wheel (4) which rotates with the wheel (1) of the vehicle and in which the electrical characteristics of one at least (6a) of the teeth (6) are modified by a fall in pressure in one of the tyres,

- an electro-magnet (10) which is fixed in respect of rotation and which forms the electromagnetic detector in which the toothed wheel (4) generates a signal formed by successive pulses whose period (Tn) is modified by the variation in the electrical characteristics that is caused by the fall in pressure in one of the tyres, and by the conditions in respect of speed and acceleration in the rotary movement of the wheel, and

- a calculating means (23) which calculates the values of the successive periods, the relative variation in said value over a plurality of periods, and which interprets said variation as acceleration or deceleration or else as a state of underinflation of the tyre depending on the nature of said variation;

characterised in that the toothed wheel (4) whose teeth (6) are of an electrically conductive non-magnetic material has one tooth (6a) at least which is formed by a coil (7) carried by an insulating material and forming part of a circuit which is closed by at least one pressure switch (2) when the pressure in the corresponding tyre is correct and which is opened when said pressure is insufficient.

2. Apparatus according to claim 1 characterised in that said toothed wheel (4) is formed from a single-sided or double-sided printed circuit forming both the normal teeth (6) by solid conducting portions and the special tooth (6a) carrying the coil (7) by means of a spiral configuration printed circuit track.

3. Apparatus according to claim 2 characterised in that said printed circuit is in the form of a rectilinear rack which is rolled in a cylindrical configuration so as to facilitate axial fitting and removal of the assembly of the wheel by the teeth (6, 6a) which are also cylindrical penetrating into the gap (18) of the electro-magnet (10) which is parallel to the axis of the wheel.

4. Apparatus according to any one of the preceding claims characterised in that the electromagnetic detector is formed by an electro-magnet (10) with magnetic circuit (17) which is closed except for a reduced air gap (18), through the space of which pass the teeth of the phonic wheel (4).

5. Apparatus according to any one of the preceding claims characterised in that the calculating means (23) calculates three successive values (α1, α 2, α 3) of the ratio (α n) between one period (Tn) and the preceding period (Tn-1) and if in the course of successive revolutions of the wheel the second value (α 2) is double the first value (α 1) and four times the third value (α 3), an alarm or an indicator relating to underinflation of the wheel being considered is triggered off while in the opposite situation the calculating means determines the kinetic state of said wheel and the kinetic state of the vehicle from that of a plurality of wheels.

## Patentansprüche

1. Vorrichtung zur Feststellung des Unterdrucks eines Reifens eines Kraftfahrzeugrades (1), die auch zur Messung des kinetischen Zustands des Rades und, ausgehend vom kinetischen Zustand mehrerer Räder, zur Messung des kinetischen Zustandes des Fahrzeuges dient, die aufweist:

- einen sich mit dem Rad drehenden elektrischen Schaltkreis (7), der periodisch einen elektromagnetischen Fühler (10) passiert,

- ein sich mit dem Fahrzeugrad (1) drehendes Zahnrad (4), bei dem die elektrischen Eigenschaften wenigstens eines (6a) der Zähne (6) durch einen Druckabfall in einem der Reifen verändert werden,

- einen drehfesten Elektromagneten (10), der den elektromagnetischen Fühler bildet und in dem das Zahnrad (4) ein Signal erzeugt, das aus aufeinanderfolgenden Impulsen besteht, deren Periode (Tn) durch die Veränderung der elektrischen Eigenschaften verändert wird, die vom Druckabfall in einem der Reifen hervorgerufen werden, sowie von den Geschwindigkeits- und Beschleunigungsbedingungen der Umdrehung des Rades, und

-einen Rechner (23), der die Werte der aufeinanderfolgenden Perioden berechnet, die Relativveränderung dieses Wertes über mehrere Perioden und der diese Veränderung interpretiert als Beschleunigung oder als Abbremsung oder auch als Unterdruckzustand des Reifens je nach Verlauf dieser Änderung;

dadurch gekennzeichnet, daß das Zahnrad (4), desen Zähne (6) aus nichtmagnetischem, die Elektrizität leitendem Material bestehen, wenigstens einen Zahn (6a) aufweisen, der aus einer Spule (7) besteht, die von einem Isoliermaterial getragen wird und zu einem Schaltkreis gehört, der durch wenigstens einen Druckkontakt (2) geschlossen ist, wenn der Druck im zugehörigen Reifen ausreichend ist und der offen ist, wenn dieser Druck nicht ausreichend ist.

2. Vorrichtung nach Anspruch 1, dadurch gekennzeichnet, daß das Zahnrad (4) ausgehend von einer einseitigen oder zweiseitigen gedruckten Schaltung gebildet ist, die sowohl die normalen Zähne 6 durch die massiven leitenden Teile bildet als auch den Spezialzahn (6a), der die Spule (7) trägt, mit einer spiralförmigen Linienführung der gedruckten Schaltung.

3. Vorrichtung nach Anspruch 2, dadurch gekennzeichnet, daß die gedruckte Schaltung die Form einer geraden Zahnstange aufweist, die zylindrisch derart aufgerollt ist, daß die axiale Montage und Demontage der Radanordnung durch Eindringen der ebenfalls zylindrischen Zähne (6, 6a) in den Spalt (18) des Elektromagneten (10), der parallel zur Radachse ist, erleichtert wird.

4. Vorrichtung nach einem der vorhergehenden Ansprüche, dadurch gekennzeichnet, daß der elektromagnetische Fühler aus einem Elektromagneten (10) mit geschlossenem magnetischen Kreis (17) besteht, mit Ausnahme eines geringen Spaltes (18), der von den Zähnen des entsprechenden Rades (4) durchsetzt wird.

5. Vorrichtung nach einem der vorhergehenden Ansprüche, dadurch gekennzeichnet, daß der Rechner (23) drei aufeinanderfolgende Werte ($\alpha$ 1, $\alpha$ 2, $\alpha$ 3) des Verhältnisses ($\alpha n$) berechnet, zwischen einer Periode (Tn) und der vorhergehenden Periode (Tn-1) und daß wenn während aufeinanderfolgender Radumdrehungen der zweite Wert ($\alpha 2$) das Doppelte des ersten Wertes ($\alpha 1$) ist und das Vierfache des dritten Wertes ($\alpha 3$) ist, ein Alarm oder eine Unterdruckanzeige des betrachteten Rades ausgelöst wird, während im gegenteiligen Fall der Rechner den kinetischen Zustand dieses Rades und den kinetischen Zustand des Fahrzeugs aus denjenigen von mehreren Rädern berechnet.

FIG.1

0117172

# FIG.2

# FIG.4

# FIG.5

# FIG.3

**FIG.6**

INITIALISATION DU SYSTEME

CALCUL DE L'ETAT CINEMATIQUE DU VEHICULE

RETOUR TRAITEMENT 1ère ROUE

TOUTES LES ROUES ONT-ELLES ETE TRAITEES ?

∅

TRAITEMENT DE LA ROUE SUIVANTE

RETOUR TRAITEMENT ROUE SUIVANTE

CAPTEUR DEFECTUEUX

N

FONCTIONNEMENT DU CAPTEUR NORMAL ?

AFFICHAGE DEFAUT CAPTEUR

LECTURE DE LA PILE DES PERIODES $T_n$

CALCUL DE LA MOYENNE DES $T_n$

$$MT_n = \frac{\Sigma T_n}{n}$$

N

LA MOYENNE DES $T_n$ = MOYENNE PRECEDENTE DES $T_n$ ?

MISE A JOUR MOYENNE $T_n$ PRECEDENTE

CALCUL ACCELERATION ET VITESSE DE LA ROUE

CALCUL DES COEFFICIENTS ∝

$$\propto 1 = \frac{T_n}{T_{n-1}} \quad \propto 2 = \frac{T_{n+1}}{T_n} \quad \propto 3 = \frac{T_{n+2}}{T_{n+1}}$$

RETOUR CALCUL ET TEST COEFFICIENT ∝ SUIVANTS

N   ∝2 = 2∝1   ∅

N   ∝2 = 4∝3   ∅

N   FIN DE LA PILE DES $T_n$

n = n+1

DEFAUT DE PRESSION SUR LA ROUE

N   LE DEFAUT A-T-IL ETE DETECTE P. FOIS ?

INCREMENT NOMBRE DE DEFAUT DETECTE

AFFICHAGE DEFAUT PRESSION SUR LA ROUE

INTERRUPTION MESURE PERIODE ROUE

MESURE PERIODE $T_n$

FIN DE PILE ?

REINITIALISATION DE LA PILE

CHARGEMENT $T_n$ DANS LA PILE CORRESPONDANT A LA ROUE

INCREMENT DE LA PILE